(19) **Europäisches Patentamt**

**European Patent Office**

**Office européen des brevets**

(11) **EP 1 338 509 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(51) Int Cl.$^7$: **B64G 1/50**

(21) Anmeldenummer: **02026277.0**

(22) Anmeldetag: **27.11.2002**

(54) **Satellit mit einer Radiatorfläche**

Satellite with a radiator surface

Satellite avec une surface radiatrice

(84) Benannte Vertragsstaaten:
**DE FR GB IT**

(30) Priorität: **26.02.2002 DE 10208240**

(43) Veröffentlichungstag der Anmeldung:
**27.08.2003 Patentblatt 2003/35**

(73) Patentinhaber: **EADS Astrium GmbH**
**81663 München (DE)**

(72) Erfinder:
• **Natusch, Andreas**
**88677 Markdorf (DE)**
• **Faust, Thomas**
**88090 Immenstaad (DE)**
• **Schwarzott, Walter**
**88048 Friedrichshafen (DE)**

(74) Vertreter: **Ulrich, Thomas**
**EADS Deutschland GmbH**
**Patentabteilung**
**LG-SP**
**81663 Ottobrunn (DE)**

(56) Entgegenhaltungen:
**US-A- 3 307 783**

• **PATENT ABSTRACTS OF JAPAN vol. 2000, no. 17, 5. Juni 2001 (2001-06-05) & JP 01 083498 A (HITACHI LTD), 29. März 1989 (1989-03-29)**
• **PATENT ABSTRACTS OF JAPAN vol. 017, no. 151 (M-1387), 25. März 1993 (1993-03-25) & JP 04 321497 A (NEC CORP), 11. November 1992 (1992-11-11)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eines Satelliten mit einer Radiatorfläche.

Radiatorflächen werden in der Raumfahrt genutzt, um in Raumfahrzeugen anfallende Verlustwärme an eine kalte Weltraum-Umgebung abzustrahlen, um damit die interne Temperatur zu regulieren. Angepasste Oberflächeneigenschaften sorgen dafür, dass die internen Lasten so gut wie möglich als IR-Strahlung in die Umgebung abgegeben werden können, siehe z.B. JP 01 083 498. Die externen Lasten (hauptsächlich UV-Strahlung von der Sonne) sollen hingegen so wenig wie möglich absorbiert werden. Dies erfordert Oberflächen, die einen hohen infraroten Emissionskoeffizienten ($\varepsilon$) besitzen, aber einen kleinen solaren Absorptionskoeffizienten ($\alpha$).

Dieses Konzept ist nicht in einer Umgebung anwendbar, in der sich die externen Lasten aus einer etwa 10-fach höheren UV-Strahlung (verglichen mit erdnahen Umlaufbahnen) kombiniert mit einer extrem hohen IR-Strahlung zusammensetzen. Solche Umgebungsbedingungen sind z.B. in einer Umlaufbahn um den Merkur gegeben.

Mit dem oben beschriebenen Radiatorkonzept ist eine Lösung des Problems nicht möglich, da die vom Merkur kommende IR-Strahlung entsprechend der IR-Emissivität der Radiatoroberfläche absorbiert wird (IR-Emissivität = IR-Absorptivität). Aufgrund der sehr hohen $\varepsilon$-Werte der Standardradiatoroberfläche würden extreme Wärmemengen in der Größenordnung von einigen kW/m$^2$ absorbiert werden und zu einer unzulässigen Erwärmung des Satelliten führen.

Der Erfindung liegt die Aufgabe zugrunde, einen Radiator an einem Satelliten zu entwickeln, der auch unter den beschriebenen extremen Bedingungen, wie sie z.B. im Merkurorbit herrschen, niedrige Temperaturen im Inneren des Satelliten garantiert.

Diese Aufgabe wird mit dem Verfahren nach Patentanspruch 1 gelöst. Vorteilhafte Ausführungen der Erfindung sind Gegenstand von Unteransprüchen.

Das Grundprinzip des erfindungsgemäßen Radiators basiert auf:

- der Abschattung der Radiatorfläche durch zusätzliche Rippen auf der Radiatorfläche,
- der Vergrößerung der Radiatorfläche durch diese zusätzlichen Rippen.

In einer vorteilhaften Ausführung können darüberhinaus zusätzliche Blenden oder Schilde an den Rändern der Radiatorfläche angeordnet werden, um die direkte Sonneneinstrahlung auf den Radiator zu verhindern und direkte Merkur-Einstrahlung zu verringern.

Die Erfindung wird im folgenden anhand konkreter Ausführungsbeispiele unter Bezugnahme auf Figuren näher beschrieben. Es zeigen:

Fig. 1     eine Skizze zur Darlegung der geometrischen Verhältnisse des Satellitenorbits um den Merkur;

Fig. 2     eine Skizze zur Darlegung der geometrischen Verhältnisse von Satellitenorbit und Merkurbahn um die Sonne;

Fig. 3     ein Radiatorfläche mit erfindungsgemäßen Rippen; die Rippen sind zusätzlich in einer Detaildarstellung (links) vergrößert dargestellt;

Fig. 4     eine weitere erfindungsgemäße Ausführung eines Radiators mit zusätzlichem Merkur- und Sonnenschild;

Fig. 5     einen weiteren erfindungsgemäßen Radiator, wobei die Temperaturbereiche auf dem Radiator angegeben sind.

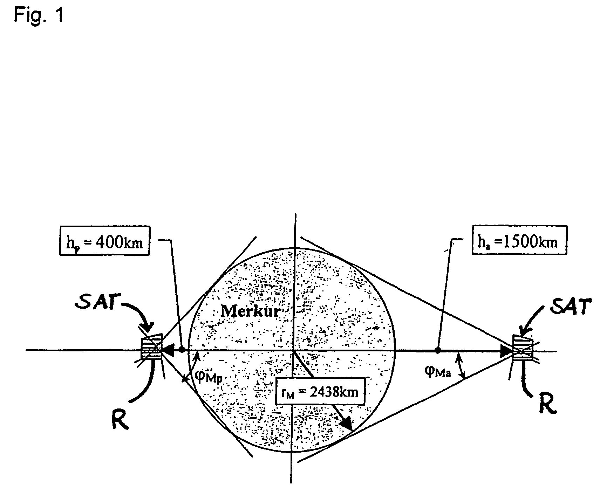

Fig. 1 zeigt eine Skizze zur Darlegung der geometrischen Verhältnisse eines Satellitenorbits um den Merkur. Es wird von einer elliptischen Bahn um den Merkur ausgegangen, deren Bahnhöhe am Perigäum 400km und am Apogäum 1500km beträgt (die Bahnebene steht senkrecht zur Papierebene). Eine Seite des den Merkur beobachtenden Satelliten SAT ist ständig nadirorientiert.

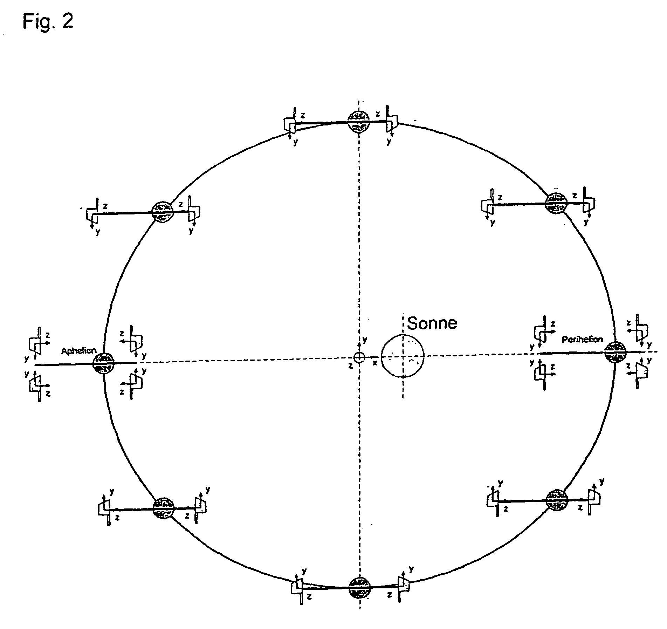

Direkte Sonneneinstrahlung auf die Radiatorebene von vorne wird vermieden, indem der Satellit in geeigneter Weise gedreht wird, sobald er an der Stelle des Orbits angelangt ist, an dem der Sonnenvektor parallel zur Radiatorebene verläuft (siehe Fig. 2). Wie man aus Fig. 2 erkennt, erfolgt eine solche Drehung des Satelliten genau zwei Mal während eines Umlaufs des Merkurs um die Sonne. Die Bahnebene des Satelliten verläuft in Fig. 2 senkrecht zur Papierebene. Die Orientierung der Bahnebene des Satelliten ist raumfest über den gesamten Umlauf des Merkurs um die Sonne.

Somit wird eine Seite des Satelliten nie von der Sonne beschienen und kann somit als Radiatorfläche R genutzt werden. Der Normalenvektor der Radiatorfläche R steht in allen Punkten der Satellitenumlaufbahn senkrecht zur Nadirrichtung. In einer anderen, hier nicht dargestellten Ausführung kann die Orientierung der Radiatorfläche zur Nadirrichtung auch derart ausgebildet sein, das der Winkel zwischen Normalenvektor der Radiatorfläche und Nadirrichtung einen Wert im Intervall zwischen 90° bis 115° annimmt.

Die dargestellte Satellitenbahn entspricht der Bahn des Orbiters der Bepi Colombo Merkurmission, bei der der hier beschriebene Radiator zum Einsatz kommen soll. Die gegebenen Abmessungen und Bahndaten sollen dabei nur als Beispiel dienen, da das Radiatorkonzept auf beliebige Bahnen um den Merkur oder sonstigen Planeten anwendbar ist.

Der Sichtwinkel, unter dem der Merkur vom Orbiter aus gesehen wird, ergibt sich aus folgenden geometrischen Bedingungen (Definition der verwendeten Größen siehe letzte Seite der Beschreibung):

$$\varphi_M(t) = arcsin\left(\frac{r_M}{h(t) + r_M}\right)$$

$$\varphi_{Mp} = \varphi(h = 400\,km) = 59{,}2° = \varphi_{M\,max}$$

$$\varphi_{Ma} = \varphi(h = 1500\,km) = 38{,}2°$$

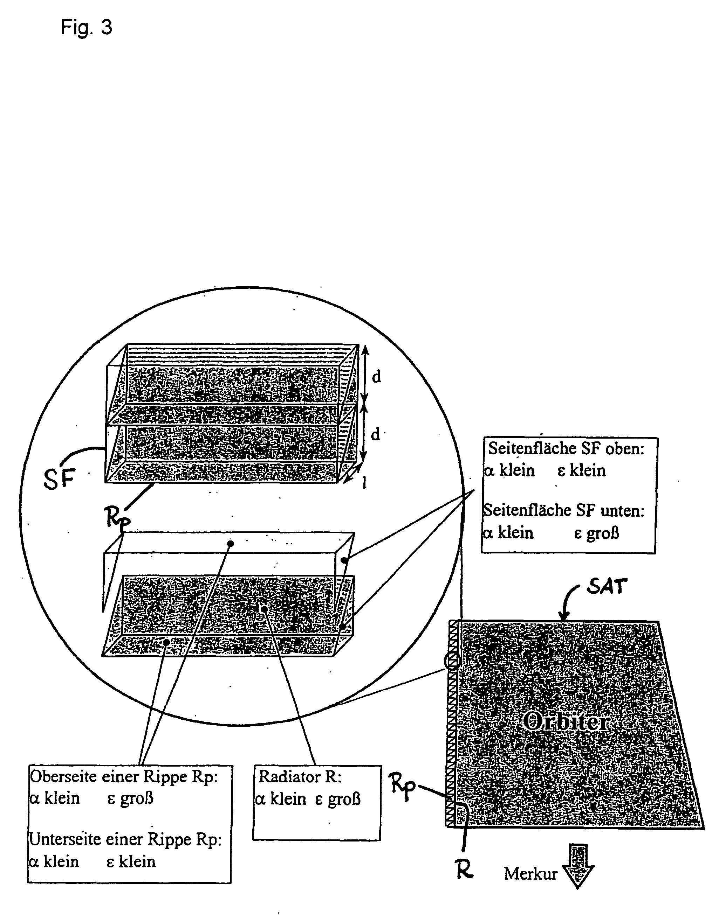

Wie man am besten aus Fig. 3 erkennen kann, sind gemäß der Erfindung auf der Radiatorfläche R parallel zueinander ausgerichtete Rippen Rp angeordnet. Diese sind wärmeleitend mit der Radiatorfläche R verbunden. Die gedachte Schnittlinie von Rippe Rp und Radiatorfläche R steht senkrecht zur Nadirrichtung

Um die Radiatorfläche R vor der Merkurstrahlung optimal zu schützen, müssen Länge und Abstand der erfindungsgemäßen Rippen Rp entsprechend dem maximalen Sichtwinkel ($\varphi_{Mmax}$ gewählt werden. Bei einer angenommenen Radiatorhöhe von 1,5m und mit 32 Rippen ergeben sich folgende Abmessungen:

$$d \approx 47\,mm$$

$$l = d*tan(59{,}2°) \approx 79\,mm$$

Der Winkel zwischen Rippe Rp und Radiatorfläche R ist in der gezeigten Ausführung nach Fig. 3 zu 90º gewählt. Alternativ können hier Winkel gewählt werden die im Intervall zwischen 90º und 110º liegen, so dass die Rippen gegenüber der Ausführung nach Fig. 2 leicht nach oben - vom Merkur weg - gedreht sind.

Zusätzlich zur Geometrie spielt die Auswahl der Oberflächen eine wesentliche Rolle.

An den seitlichen Rändern (Ränder parallel zur Nadirrichtung) des Radiators R sind vorteilhaft zusätzliche streifenförmige Seitenflächen SF angeordnet, um den seitlichen Einfall von Strahlung auf den Radiator R zu verhindern.

Die Unterseite der Rippen Rp und Teile der Innenseite der Seitenflächen SF (hell in Fig. 3) werden direkt von der Merkur-IR- und Albedostrahlung (UV) getroffen. Um die absorbierte Wärme möglichst gering zu halten, muss für diese Flächen eine Beschichtung gewählt werden, die sehr geringe $\varepsilon$- und $\alpha$-Werte hat. Zudem sollte die Oberfläche im hier relevanten Wellenlängenbereich der IR-Strahlung (äquivalent der Strahlung eines schwarzen Körpers im Temperaturbereich <700K) diffus und nicht spiegelnd reflektieren, damit möglichst wenig Energie per Vielfachreflektion zur vertikalen Radiatorfläche gelangt. Ein mögliches Material ist Alochrom ($\alpha_{EOL}$~0,15 und $\varepsilon$ -0,05).

Die Oberseite der Rippen Rp und Teile der Innenseite der Seitenflächen SF (dunkel in Fig. 3), welche keiner direkten IR- und Albedostrahlung (UV) des Merkur ausgesetzt sind, sollen sowohl die absorbierte Merkurstrahlung als auch zusätzlich einen Teil der Satellitenverlustwärme zur kalten Umgebung abstrahlen. Diese Flächen werden somit als zusätzliche Radiatorflächen genutzt. Hierfür wird eine Oberfläche -mit einem möglichst großen $\varepsilon$-Wert benötigt. Damit die per Vielfachreflektion ankommende Merkur-Albedostrahlung (UV) nur zu einem kleinen Teil absorbiert wird, ist ein möglichst kleiner $\alpha$-Wert erforderlich. Mögliche Materialien wären OSRs ($\alpha_{EOL}$~0,15 und $\varepsilon$ ~0,83) oder weiße keramische Oberflächen oder ähnliches ($\alpha_{EOL}$~0,20... 0,30 und $\varepsilon$ ~0,80...0,90).

Soweit in der Beschreibung der vorliegenden Erfindung bei der Beschreibung der Oberflächenmaterialien von geringen Werten für $\alpha$ und $\varepsilon$ die Rede ist, sind damit insbesondere Werte von unter 0,30, bevorzugt kleiner als 0,15 gemeint.

Soweit in der Beschreibung der vorliegenden Erfindung bei der Beschreibung der Oberflächenmaterialien hohe Werte für $\varepsilon$ die Rede ist, sind damit insbesondere Werte größer 0,7, bevorzugt größer als 0,85 gemeint.

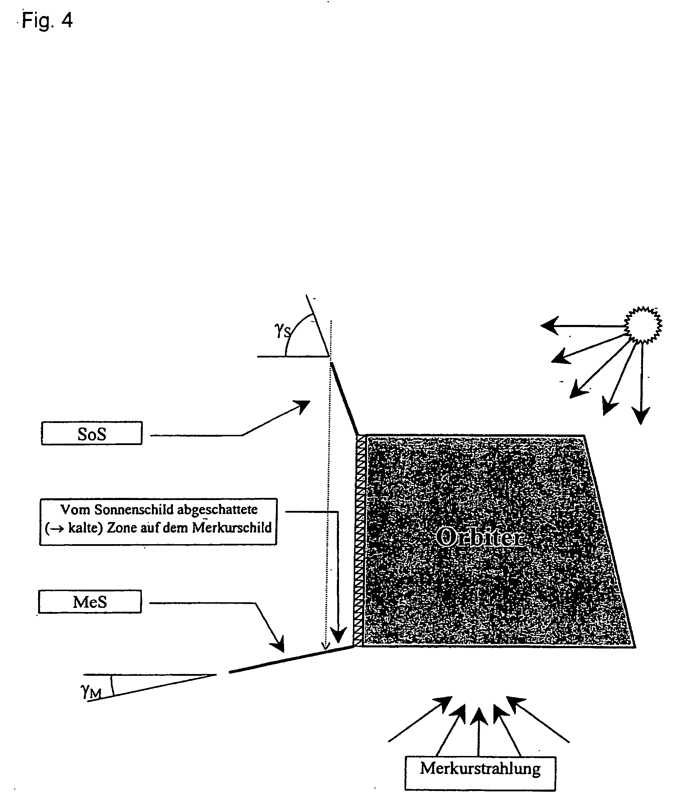

Um die Radiatortemperatur weiter zu reduzieren, können zusätzlich ein Merkurschild MeS und ein Sonnenschild SoS am Orbiter vorgesehen werden. Eine solche Ausführung ist in Fig. 4 dargestellt.

Der Merkurschild MeS dient dazu, die direkte Merkurstrahlung auf der Radiatorfläche R zu verringern. Er kann aus einer auf einem Rahmen aufgespannten MLI für Hochtemperaturanwendungen aufgebaut sein. Die dem Merkur zugewandte Oberfläche besteht dabei aus einem Material, das extremen Temperaturen widerstehen können muss (z.B. weißes Keramikpapier).

Es gibt Orbitpositionen, bei denen die Sonne direkt auf die Oberseite (dem Merkur abgewandt) des Merkurschildes MeS scheinen kann. Um die absorbierte Wärmemenge und somit die Temperatur so gering wie möglich zu halten, muss ein Material mit geringen $\alpha$- und hohen $\varepsilon$-Werten gewählt werden (z.B. OSRs oder ebenfalls weißes Keramikpapier). Bei den gegebenen Orbitbedingungen hat sich ein Anstellwinkel $\gamma_M$ von 15° gegenüber der horizontalen Richtung als optimal ergeben.

Um die eben beschriebene Sonneneinstrahlung auf die Oberseite des Merkurschildes MeS zu verringern, kann zusätzlich ein Sonnenschild SoS vorgesehen werden. Er schattet in kritischen Orbitpositionen die Teile des Merkurschildes ab, die sich nah am Radiator R befinden und somit den größten Einfluss auf ihn haben. Der Aufbau kann dem des Merkurschildes MeS sehr ähnlich sein. Der einzige Unterschied ist das Material auf der dem Merkur zugewandten Seite. Es handelt sich hierbei vorteilhaft um auf Kaptonfolie aufgedampfes Aluminium, das aufgrund des sehr kleinen $\varepsilon$-Wertes nur sehr wenig Merkur-IR-Strahlung absor-

biert. Außerdem sorgen seine spiegelnden Eigenschaften zusammen mit dem großen Anstellwinkel ($\gamma_{s \geq} \varphi_{Mmax}$) dafür, dass die ankommende Strahlung auf jeden Fall von Radiator und Merkurschild weg reflektiert werden.

Die vom Sonnenschild SoS abgeschattete und damit kalte Zone auf der Oberseite des Merkurschilds MeS ist in Fig. 4 ebenfalls eingezeichnet.

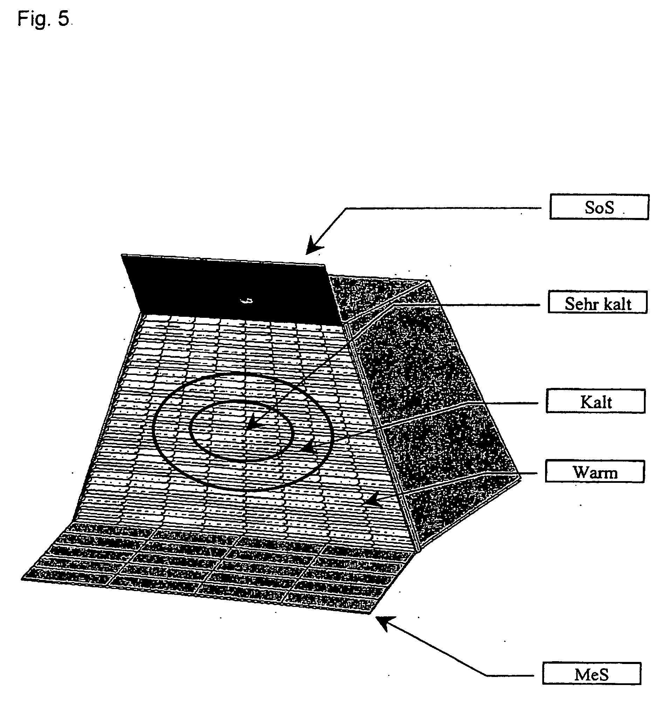

Eine Gleichverteilung der orbiterinternen Lasten hat gezeigt, dass sich in der Mitte des Radiators R die niedrigsten Temperaturen einstellen (Fig. 5). Eine thermische Entkopplung dieser Radiatorbereiche voneinander kann dazu genutzt werden, verschiedene Temperaturbereiche zu generieren, die auf die Satellitennutzlast zugeschnitten werden können.

Die in diesem Dokument verwendeten Abkürzungen haben folgende Bedeutung:

| | |
|---|---|
| d | Rippenabstand auf dem Radiator |
| $h_a$ | Bahnhöhe im Apogäum |
| hp | Bahnhöhe im Perigäum |
| IR | Infrarot |
| l | Rippenbreite auf dem Radiator |
| MLI | Multi Layer Insulation (Vielschichtisotation) |
| OSR | Optical Solar Reflectors |
| $r_m$ | Radius des Merkur |
| UV | Ultraviolett |
| $\alpha$ | UV Absorptionskoeffizienten (Materialeigenschaft) |
| $\varepsilon$ | IR Emissionskoeffizienten (Materialeigenschaft) |
| $\varphi_M(t)$ | Winkel zwischen Nadir-Richtung und Horizont des Merkur vom Satelliten aus gesehen |
| $\varphi_{Ma}$ | $\varphi_M$(Apogäum) |
| $\varphi_{Mmax}$ | maximale Winkel zwischen Nadir-Richtung und Horizont des Merkur vom Satelliten aus gesehen |
| $\varphi_{Mp}$ | $\varphi_M$(Perigäum) |
| $\gamma_M$ | Anstellwinkel des Merkurschildes |
| $\gamma_S$ | Anstellwinkel des Sonnenschildes |

**Patentansprüche**

1. Satellit (SAT) mit einer Radiatorfläche (R), wobei

   • zur Abschattung gegenüber einer Planeten-IR- oder der Planeten-Albedostrahlung auf der Radiatorfläche (R) parallel zueinander ausgerichtete Rippen (Rp) angeordnet sind, die wärmeleitend mit der Radiatorfläche (R) verbunden sind,

   • wobei die im Einsatz des Satelliten im Orbit eines Planeten dem Planeten zugewandten Oberflächen der Rippen (Rp)

      - einen geringen IR-Absorptionskoeffizienten aufweisen,

   • und wobei die im Einsatz des Satelliten im Orbit eines Planeten dem Planeten abgewandten Oberflächen der Rippen (Rp) einen hohen IR-Absorptionskoeffizienten aufweisen,

   **dadurch gekennzeichnet, dass**

   • die im Einsatz des Satelliten im Orbit eines Planeten dem Planeten zugewandten Oberflächen der Rippen (Rp)

      - einen solaren Absorptionskoeffizienten von kleiner 0,30 und
      - eine für IR-Strahlung äquivalent der Wärmestrahlung eines schwarzen Körpers bei weniger als 700K diffus reflektierende Oberfläche

   aufweisen,

   • und dass die im Einsatz des Satelliten im Orbit eines Planeten dem Planeten abgewandten Oberflächen der Rippen (Rp) einen solaren Absorptionskoeffizienten von kleiner 0,30 aufweisen.

2. Satellit nach Anspruch 1, **dadurch gekennzeichnet, dass** die Radiatorfläche (R) einen hohen IR-Absorptionskoeffizienten und einen solaren Absorptionskoeffizienten von kleiner 0,30 aufweist.

3. Satellit nach einem der vorangehenden Ansprüche, **dadurch gekennzeichnet**, für den Abstand d zweier benachbarter Rippen (Rp) und die Breite l einer Rippe (Rp) gilt:

$$l = d * \tan(\varphi_{M\,max})$$

   mit $\varphi_{M\,max}$: maximaler Winkel zwischen Nadir-Richtung und Horizontrichtung des Planeten vom Satelliten (SAT) aus gesehen.

4. Satellit nach einem der vorangehenden Ansprüche, **dadurch gekennzeichnet, dass** an den Rändern der Radiatorfläche (R) streifenförmige Seitenflächen (SF) vorhanden sind, die senkrecht zu den Rippen (Rp) orientiert sind.

5. Satellit nach einem der vorangehenden Ansprüche, **dadurch gekennzeichnet, dass** an einer im Einsatz des Satelliten im Orbit eines Planeten dem Planeten zugewandten Kante der Radiatorfläche ein zusätzliches Schild (MeS) zur Abschattung der Planeten-IR- oder der Planeten-Albedostrahlung angeordnet ist.

6. Satellit nach einem der vorangehenden Ansprüche, **dadurch gekennzeichnet, dass** an einer beim Einsatz des Satelliten im Orbit eines Planeten dem Planeten abgewandten Kante der Radiatorfläche ein zusätzliches Schild (SoS) zur Abschattung der Sonnenstrahlung angeordnet ist.

## Claims

1. Satellite (SAT) with a radiator surface (R), wherein

   - for shading relative to a planetary IR or the planetary albedo radiation, ribs (Rp) aligned parallel to one another are arranged on the radiator surface (R), which ribs are connected in a heat-conducting manner to the radiator surface (R),

   - wherein the surfaces of the ribs (Rp) facing the planet in use of the satellite in the orbit of a planet

     - have a low IR absorption coefficient,

   - and wherein the surfaces of the ribs (Rp) facing away from the planet in use of the satellite in the orbit of a planet have a high IR absorption coefficient,

   **characterized in that**

   - the surfaces of the ribs (Rp) facing the planet in use of the satellite in the orbit of a planet

     - have a solar absorption coefficient of less than 0.30 and
     - have a diffusely reflecting surface for IR radiation equivalent to the thermal radiation of a black body at less than 700K,

   - and that the surfaces of the ribs (Rp) facing away from the planet in use of the satellite in the orbit of a planet have a solar absorption coefficient of less than 0.30.

2. Satellite according to claim 1, **characterized in that** the radiator surface (R) has an IR absorption coefficient and a solar absorption coefficient of less than 0.30.

3. Satellite according to one of the preceding claims, **characterized in that** for the distance $d$ between two adjacent ribs (Rp) and the width $l$ of a rib (Rp) the following applies:

$$l = d * \tan(\varphi_{M\,max})$$

with $\varphi_{M\,max}$ the maximum angle between nadir direction and horizon direction of the planet seen from the satellite (SAT).

4. Satellite according to one of the preceding claims, **characterized in that** stripe-shaped lateral faces (SF) are present at the edges of the radiator surface (R) that are oriented perpendicularly to the ribs (Rp).

5. Satellite according to one of the preceding claims, **characterized in that** on one edge of the radiator surface facing the planet in use of the satellite in the orbit of a planet an additional shield (MeS) is arranged for shading of the planetary IR or the planetary albedo radiation.

6. Satellite according to one of the preceding claims, **characterized in that** on one edge of the radiator surface facing away from the planet in use of the satellite in the orbit of a planet an additional shield (SoS) is arranged for shading of the solar radiation.

## Revendications

1. Satellite (SAT) avec une surface radiatrice (R),

   - des ailettes (Rp) orientées parallèlement entre elles, en liaison conductrice de chaleur avec la surface radiatrice (R), étant disposées sur la surface radiatrice pour l'assombrissement par rapport à un rayonnement IR ou au rayonnement d'albédo de planète,
   - les surfaces des ailettes (Rp) qui dans l'utilisation du satellite dans l'orbite d'une planète sont tournées vers la planète

     - présentant un faible coefficient d'absorption IR,

   - et les surfaces des ailettes (Rp) qui dans l'utilisation du satellite dans l'orbite d'une planète sont opposées à la planète présentant un coefficient d'absorption IR élevé,

   **caractérisé en ce que**

   - les surfaces des ailettes (Rp) qui dans l'utilisation du satellite dans l'orbite d'une planète sont tournées vers la planète présentent

     - un coefficient d'absorption solaire de moins de 0,30 et
     - une surface de réflexion diffuse pour le rayonnement IR équivalent au rayonnement thermique d'un corps noir à moins de 700 K,

- et que les surfaces des ailettes (Rp) qui dans l'utilisation du satellite dans l'orbite d'une planète sont opposées à la planète présentent un coefficient d'absorption solaire de moins de 0,30.

2. Satellite suivant la revendication 1, **caractérisé en ce que** la surface radiatrice (R) présente un coefficient d'absorption IR élevé et un coefficient d'absorption solaire de moins de 0,30.

3. Satellite suivant l'une des revendications précédentes, **caractérisé en ce que** pour l'écartement d de deux ailettes (Rp) voisines et la largeur 1 d'une ailette (Rp) on a :

$$l = d*\tan(\varphi_{Mmax})$$

avec $\varphi_{Mmax}$ : angle maximal entre la direction du nadir et la direction horizontale de la planète, vu du satellite (SAT).

4. Satellite suivant l'une des revendications précédentes, **caractérisé en ce que** des surfaces latérales en forme de bandes (SF), orientées perpendiculairement aux ailettes (Rp), sont présentes sur les bords de la surface radiatrice (R).

5. Satellite suivant l'une des revendications précédentes, **caractérisé en ce qu'**un bouclier supplémentaire (MeS) pour l'assombrissement du rayonnement IR ou d'albédo de planètes est disposé sur un bord de la surface radiatrice qui dans l'utilisation du satellite dans l'orbite d'une planète est tourné vers la planète.

6. Satellite suivant l'une des revendications précédentes, **caractérisé en ce qu'**un bouclier supplémentaire (SoS) pour l'assombrissement du rayonnement solaire est disposé sur un bord de la surface radiatrice qui dans l'utilisation du satellite dans l'orbite d'une planète est opposé à la planète.

Fig. 1

Fig. 2

Fig. 3

Seitenfläche SF oben:
α klein   ε klein

Seitenfläche SF unten:
α klein   ε groß

SAT

Orbiter

Oberseite einer Rippe Rp:
α klein   ε groß

Unterseite einer Rippe Rp:
α klein   ε klein

Radiator R:
α klein  ε groß

Rp

R   Merkur

Fig. 4

$\gamma_S$

SoS

Vom Sonnenschild abgeschattete
(→ kalte) Zone auf dem Merkurschild

MeS

$\gamma_M$

Orbiter

Merkurstrahlung

Fig. 5

SoS

Sehr kalt

Kalt

Warm

MeS